(19) Europäisches Patentamt
European Patent Office
Office européen des brevets

(11) EP 3 922 677 B1

(12) **EUROPEAN PATENT SPECIFICATION**

(45) Date of publication and mention of the grant of the patent:
**01.03.2023 Bulletin 2023/09**

(21) Application number: **20752551.0**

(22) Date of filing: **04.02.2020**

(51) International Patent Classification (IPC):
***C08L 69/00*** *(2006.01)* ***G06F 3/041*** *(2006.01)*
***C08J 5/18*** *(2006.01)*

(52) Cooperative Patent Classification (CPC):
(C-Sets available)
**C08J 5/18; C08L 69/00; G06F 3/041;**
C08J 2369/00; C08J 2469/00; G06F 2203/04103

(Cont.)

(86) International application number:
**PCT/JP2020/004022**

(87) International publication number:
**WO 2020/162420 (13.08.2020 Gazette 2020/33)**

(54) **RESIN COMPOSITION AND MOLDED ARTICLE**

HARZZUSAMMENSETZUNG UND FORMARTIKEL

COMPOSITION DE RÉSINE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2019 JP 2019019463**

(43) Date of publication of application:
**15.12.2021 Bulletin 2021/50**

(73) Proprietor: **MITSUBISHI GAS CHEMICAL COMPANY, INC.**
**Chiyoda-ku**
**Tokyo 100-8324 (JP)**

(72) Inventor: **TOMITA, Keisuke**
**Tokyo 125-0051 (JP)**

(74) Representative: **Hoffmann Eitle**
**Patent- und Rechtsanwälte PartmbB**
**Arabellastraße 30**
**81925 München (DE)**

(56) References cited:
**EP-A2- 0 387 577**
**WO-A1-2017/203852**
**JP-A- H 101 539**
**JP-A- S 608 356**
**JP-A- S6 443 558**
**JP-A- H02 272 060**
**JP-A- H05 179 096**
**JP-A- H10 310 692**
**JP-A- 2018 154 819**
**US-A1- 2012 252 985**
**US-A1- 2018 223 097**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 922 677 B1

(52) Cooperative Patent Classification (CPC): (Cont.)

C-Sets
**C08L 69/00, C08L 69/00**

## Description

[Technical Field]

The present invention relates to a resin composition comprising polycarbonate resins, and to a formed article using the same.

[Background Art]

Polycarbonate resins have been applied as forming materials for a variety of products.
For example, Patent Literature 1 discloses a resin composition with excellent compatibility comprising an aromatic polycarbonate polymer obtained by carbonate-bonding 2,2-bis-(4-hydroxyphenyl)propane and an aromatic polycarbonate polymer obtained by carbonate-bonding 4,4-dihydroxy-2,2,2-triphenylethane.
Patent Literature 2 discloses a polycarbonate resin composition comprising three different polycarbonates, including a bisphenol A polycarbonate and a bisphenol AP polycarbonate.

[Citation List]

[Patent Literature]

[Patent Literature 1] Japanese Patent Laid-Open No. 64-043558

[Patent Literature 2]: JP2018154819

[Summary of Invention]

[Technical Problem]

As described in the above Patent Literature 1, in order to impart heat resistance to a bisphenol A type polycarbonate resin such as an aromatic polycarbonate polymer obtained by carbonate-bonding 2,2-bis-(4-hydroxyphenyl)propane, it is conceivable to compound therewith a bisphenol AP type polycarbonate resin such as an aromatic polycarbonate polymer obtained by carbonate-bonding 4,4-dihydroxy-2,2,2-triphenylethane. However, it was found that blending the bisphenol A type polycarbonate resin and the bisphenol AP type polycarbonate resin may result in inferior processability. Furthermore, it was also found that the resulting resin composition and formed article may become cloudy.
The present invention has an object to solve such problems, and is to provide a resin composition comprising a bisphenol AP type polycarbonate resin and a bisphenol A type polycarbonate resin, the resin composition being excellent in formability, and being also excellent in heat resistance and transparency when made into a formed article, as well as a formed article.

[Solution to Problem]

As a result of investigations for the problems described above, the present inventors have found that it is possible to solve the problems described above by setting the respective viscosity average molecular weights of the bisphenol AP type polycarbonate resin and the bisphenol A type polycarbonate resin and the ratio of the contents of both resins within particular ranges, and by setting the difference between the viscosity average molecular weights of both resins within a particular range.
More specifically, the present invention is defined as shown in the appended claims.

[Advantageous Effect of Invention]

The present invention has made it possible to provide a resin composition that is excellent in formability, and is also excellent in heat resistance and transparency when made into a formed article, as well as a formed article using the resin composition.

[Description of Embodiments]

Hereinafter, the contents of the present invention will be described in detail. Note that, in the present specification, the phrase "A to B" is used in the sense that the values listed before and after "to" are included as the lower limit value and the upper limit value, respectively.

Note that, in the present specification, the term "parts by mass" refers to the relative amounts of components, and the term "% by mass" refers to the absolute amounts of components.

The terms "film" and "sheet" both refer to a generally flat formed product that has a thin thickness relative to its length and width. In addition, the term "film" in the present specification may have a single layer or multiple layers.

The resin composition of the present invention is a resin composition is characterized in that the resin composition contains a bisphenol AP type polycarbonate resin having a viscosity average molecular weight of 18,500 to 23,000; and a bisphenol A type polycarbonate resin having a viscosity average molecular weight of 10,000 to 15,000; and the mass ratio of the bisphenol AP type polycarbonate resin to the bisphenol A type polycarbonate resin is 20/80 to 90/10, the difference between the viscosity average molecular weight of the bisphenol AP type polycarbonate resin and the viscosity average molecular weight of the bisphenol A type polycarbonate resin is 5,000 to 13,000, and the total content of the bisphenol AP type polycarbonate resin and the bisphenol A type polycarbonate resin is 92% by mass or more of the total amount of resin components contained in the composition. When the resin composition is composed as mentioned above, the resin composition is excellent in formability, and is also excellent in heat resistance and transparency when made into a formed article.

The bisphenol AP type polycarbonate resin is excellent in heat resistance. However, the bisphenol AP type polycarbonate resin has a high melt viscosity, and is inferior in processability. In addition, it was found that when the bisphenol A type polycarbonate resin, which is a general-purpose product, was compounded therewith for improving processability, it resulted in clouding. In the present invention, by blending a bisphenol AP type polycarbonate resin with a bisphenol A type polycarbonate resin having a relatively small viscosity average molecular weight, and by setting the difference between the viscosity average molecular weight of the bisphenol AP type polycarbonate resin and the viscosity average molecular weight of the bisphenol A type polycarbonate resin within a particular range, both resins were successfully compatibilized, and a formed article that has good formability and that is excellent in heat resistance and excellent in transparency was successfully provided.

<Bisphenol AP type polycarbonate resin (A)>

The bisphenol AP type polycarbonate resin refers to a resin having a carbonate unit derived from bisphenol AP or its derivative and has a constituent unit represented by the following formula (A-1) .

[Formula 1]

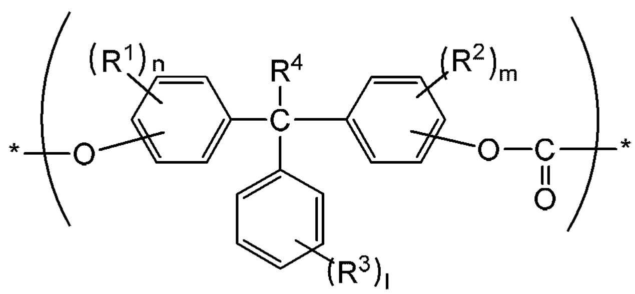

(A-1)

In the formula (A-1), $R^1$ to $R^4$ each independently represent a fluorine atom, a chlorine atom, a bromine atom, an iodine atom, an alkyl group having 1 to 9 (preferably 1 to 3) carbon atoms, an aryl group having 6 to 12 (preferably 6 to 10) carbon atoms, an alkoxy group having 1 to 5 (preferably 1 to 3) carbon atoms, an alkenyl group having 2 to 5 (preferably 2 or 3) carbon atoms, or an aralkyl group having 7 to 17 (preferably 7 to 11) carbon atoms. 1 represents an integer of 0 to 5. m and n each independently represent an integer of 0 to 4. * represents an end group or a bonding position with another constituent unit.

The constituent unit represented by the formula (A-1) is preferably a constituent unit represented by the following formula (A-2). * in the formula represents an end group or a bonding position with another constituent unit.

[Formula 2]

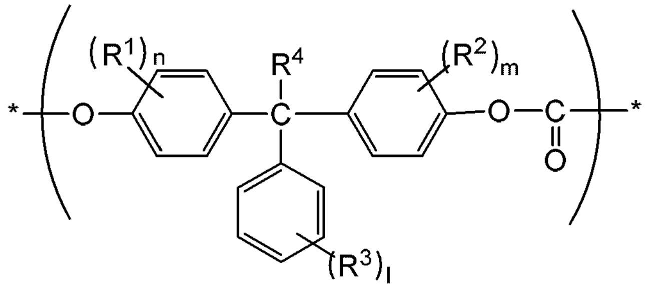

(A-2)

$R^1$, $R^2$, $R^3$, $R^4$, 1, m, and n have the same meaning as defined in the formula (A-1).

The constituent unit represented by the formula (A-2) is preferably a constituent unit represented by the following formula (A-3). * in the formula represents an end group or a bonding position with another constituent unit.

[Formula 3]

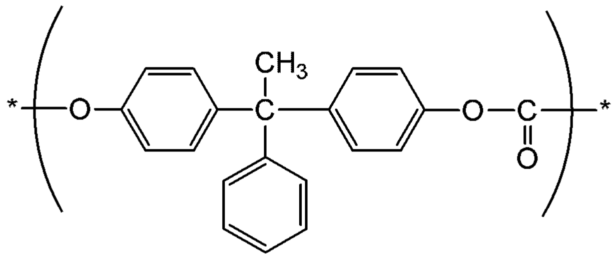

(A-3)

The content of the constituent unit represented by the formula (A-1) in the bisphenol AP type polycarbonate resin is 70% by mol or more, preferably 80% by mol or more, and more preferably 90% by mol or more in the entire constituent units excluding the end groups. The upper limit is not particularly limited, and the constituent unit represented by the formula (A-1) may account for 100% by mol. The constituent unit derived from bisphenol AP may be formed of only one kind thereof or with two or more kinds. A particularly preferable example of the bisphenol AP type polycarbonate resin is a resin substantially entirely formed of the constituent unit of the formula (A-1). The term "substantially entirely" here specifically means 99.0% by mol or more, preferably 99.5% by mol or more, and more preferably 99.9% by mol or more of the entire constituent units excluding the end groups.

The bisphenol AP type polycarbonate resin may have another constituent unit that is different from the carbonate unit derived from bisphenol AP or a derivative thereof. Examples of dihydroxy compounds forming such another constituent unit can be aromatic dihydroxy compounds described in paragraph 0014 of Japanese Patent Laid-Open No. 2018-154819.

The method for producing the bisphenol AP type polycarbonate resin is not particularly limited, and an arbitrary method can be employed. Examples of such a method may include an interfacial polymerization method, a melt transesterification method, a pyridine method, a ring opening polymerization method for cyclic carbonate compounds, and a solid phase transesterification method for prepolymers.

In the present invention the bisphenol AP type polycarbonate resin has a viscosity average molecular weight of 18,500 to 23,000. The lower limit value is further preferably 19,000 or more, more preferably 19,500 or more, and still more preferably 20,000 or more. The upper limit is preferably 22,000 or less, more preferably 21,000 or less, and still more preferably 20,500 or less. By setting the viscosity average molecular weight to the above, it becomes possible to impart excellent heat resistance while maintaining the transparency of the resulting resin composition.

Note that, when the resin composition has two or more kinds of bisphenol AP type polycarbonate resins, the measured value of the viscosity average molecular weight of the mixture is treated as the viscosity average molecular weight of the bisphenol AP type polycarbonate resins.

The viscosity average molecular weight is measured by the method described in Examples, which will be mentioned later.

In the present invention, the intrinsic viscosity of the bisphenol AP type polycarbonate resin is preferably 0.2 dL/g or more, more preferably 0.3 dL/g or more, and still more preferably 0.4 dL/g or more. The upper limit is preferably 1.0 dL/g or less, more preferably 0.8 dL/g or less, and still more preferably 0.6 dL/g or less.

Note that, when the resin composition has two or more kinds of bisphenol AP type polycarbonate resins, the

measured value of the intrinsic viscosity of the mixture is treated as the intrinsic viscosity of the bisphenol AP type polycarbonate resins.

The intrinsic viscosity is measured by the method described in Examples, which will be mentioned later.

The glass transition temperature (Tg) of the bisphenol AP type polycarbonate resin is preferably 172°C or higher, more preferably 175°C or higher, and still more preferably 180°C or higher. The upper limit is preferably 210°C or lower, more preferably 200°C or lower, and still more preferably 190°C or lower.

Note that, when the resin composition has two or more kinds of bisphenol AP type polycarbonate resins, the measured value of the Tg of the mixture is treated as the Tg of the bisphenol AP type polycarbonate resins.

The glass transition temperature (Tg) is measured by the method described in Examples, which will be mentioned later.

In the present invention, the bisphenol AP type polycarbonate resin has a melt viscosity at 300°C, measured with a shear rate of 122 $sec^{-1}$, of preferably 1,000 Pa·s or more, more preferably 1,500 Pa·s or more, and still more preferably 3,000 Pa·s or more. The upper limit value of the above melt viscosity is preferably 8,000 Pa·s or less, more preferably 7,000 Pa·s or less, and still more preferably 6,500 Pa·s or less.

Note that, when the resin composition has two or more kinds of bisphenol AP type polycarbonate resins, the measured value of the melt viscosity of the mixture is treated as the melt viscosity of the bisphenol AP type polycarbonate resins.

The melt viscosity is measured by the method described in Examples, which will be mentioned later.

The content of the bisphenol AP type polycarbonate resin in the resin composition is preferably 40% by mass or more, more preferably 50% by mass or more, and still more preferably 55% by mass or more. The upper limit value is preferably 90% by mass or less, more preferably 85% by mass or less, and still more preferably 80% by mass or less.

One kind of or two or more kinds of bisphenol AP type polycarbonate resins may be used. When two or more kinds are used, the total amount thereof is within the above range.

<Bisphenol A type polycarbonate resin (B)>

The bisphenol A type polycarbonate resin refers to a resin having a carbonate unit derived from bisphenol A or its derivative, and it has a constituent unit represented by the following formula (B-1). * in the formula represents an end group or a bonding position with another constituent unit.

[Formula 4]

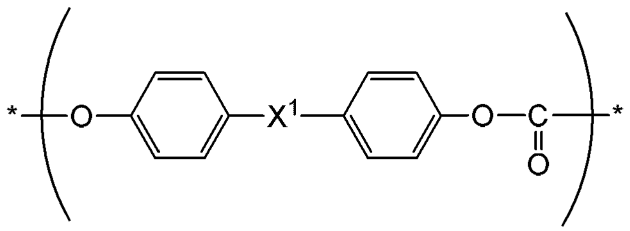

(B-1)

In the formula (B-1), $X^1$ represents the following structure.

[Formula 5]

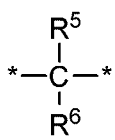

$R^5$ and $R^6$ are each a hydrogen atom or a methyl group. It is preferable that at least one of them should be a methyl group, and it is more preferable that both should be methyl groups.

It is preferable that the formula (B-1) should be represented by the following formula (B-2).

[Formula 6]

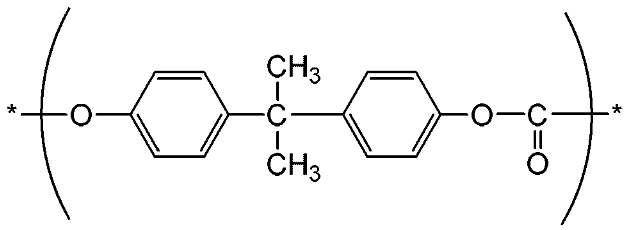

(B-2)

The content of the constituent unit represented by the formula (B-1) in the bisphenol A type polycarbonate resin is 70% by mol or more, preferably 80% by mol or more, and more preferably 90% by mol or more in the entire constituent units excluding the end groups. The upper limit is not particularly limited, and the constituent unit represented by the formula (B-1) may account for 100% by mol. The bisphenol A type polycarbonate resin is particularly preferably a resin substantially entirely formed of the constituent unit of the formula (B-1). The term "substantially entirely" here specifically means 99.0% by mol or more, preferably 99.5% by mol or more, and more preferably 99.9% by mol or more of the entire constituent units excluding the end groups.

The bisphenol A type polycarbonate resin may have another constituent unit other than the carbonate unit derived from bisphenol A or a derivative thereof. Examples of dihydroxy compounds forming such another constituent unit can be aromatic dihydroxy compounds described in paragraph 0014 of Japanese Patent Laid-Open No. 2018-154819.

The method for producing the bisphenol A type polycarbonate resin is not particularly limited, and an arbitrary method can be employed. Examples of such a method may include an interfacial polymerization method, a melt transesterification method, a pyridine method, a ring opening polymerization method for cyclic carbonate compounds, and a solid phase transesterification method for prepolymers.

In the present invention the bisphenol A type polycarbonate resin has a viscosity average molecular weight of 10,000 to 15,000. The lower limit value is further preferably 10,200 or more, more preferably 10,500 or more, and still more preferably 10,750 or more. The upper limit is preferably 14,500 or less, more preferably 14,250 or less, and still more preferably 14,200 or less. By setting the viscosity average molecular weight to the above, the compatibility with the bisphenol AP type polycarbonate resin can be further improved.

Note that, when the resin composition has two or more kinds of bisphenol A type polycarbonate resins, the measured value of the viscosity average molecular weight of the mixture is treated as the viscosity average molecular weight of the bisphenol A type polycarbonate resins.

The viscosity average molecular weight is measured by the method described in Examples, which will be mentioned later.

In the present invention, the intrinsic viscosity of the bisphenol A type polycarbonate resin is preferably 0.1 dL/g or more, more preferably 0.15 dL/g or more, and still more preferably 0.2 dL/g or more. The upper limit is preferably 0.4 dL/g or less, more preferably 0.35 dL/g or less, and still more preferably 0.32 dL/g or less.

Note that, when the resin composition has two or more kinds of bisphenol A type polycarbonate resins, the measured value of the intrinsic viscosity of the mixture is treated as the intrinsic viscosity of the bisphenol A type polycarbonate resins.

The intrinsic viscosity is measured by the method described in Examples, which will be mentioned later.

The content of the bisphenol A type polycarbonate resin in the resin composition is preferably 10% by mass or more, more preferably 15% by mass or more, and still more preferably 20% by mass or more. The upper limit value is preferably 60% by mass or less, more preferably 50% by mass or less, and still more preferably 45% by mass or less.

One kind of or two or more kinds of bisphenol A type polycarbonate resins may be used. When two or more kinds are used, the total amount thereof is within the above range.

<Blending form of resins>

In the resin composition of the present invention, the ratio ($W_{AP}/W_A$) of the mass ($W_{AP}$) of the bisphenol AP type polycarbonate resin to the mass ($W_A$) of the bisphenol A type polycarbonate resin is 20/80 to 90/10. The lower limit value of the above ratio ($W_{AP}/W_A$) is preferably 30/70 or more, more preferably 40/60 or more, still more preferably 45/55 or more, even more preferably 51/49 or more, and yet more preferably 55/45 or more. The upper limit value of the above ratio ($W_{AP}/W_A$) is preferably 85/15 or less, more preferably 80/20 or less, and still more preferably 78/22 or less.

When the above ratio ($W_{AP}/W_A$) is more than the upper limit value, the heat resistance of the resin composition is reduced. On the other hand, when the above ratio is lower than the lower limit value described above, the melt viscosity of the resin composition is increased and the formability is reduced.

In the resin composition of the present invention, the difference between the viscosity average molecular weight of the bisphenol AP type polycarbonate resin and the viscosity average molecular weight of the bisphenol A type polycarbonate resin is 5,000 or more and 13,000 or less. By setting the difference between the viscosity average molecular weights of both resins to the above range, it becomes possible to achieve good transparency and heat resistance at a high level in the formed article while appropriately adjusting the melt viscosity of the resin composition. The difference between the viscosity average molecular weights described above is preferably 5,400 or more, more preferably 5,800 or more, and still more preferably 6,000 or more. The upper limit value is preferably 12,000 or less, more preferably 11,000 or less, and still more preferably 10,000 or less.

In the present invention, the difference ($|\eta_{AP} - \eta_A|$) between the intrinsic viscosity ($\eta_{AP}$) of the bisphenol AP type polycarbonate resin and the intrinsic viscosity ($\eta_A$) of the bisphenol A type polycarbonate resin is preferably 0.04 dL/g or more, more preferably 0.06 dL/g or more, still more preferably 0.08 dL/g or more, and even more preferably 0.09 dL/g or more. The upper limit value is preferably 0.4 dL/g or less, more preferably 0.37 dL/g or less, still more preferably 0.35 dL/g or less, even more preferably 0.32 dL/g or less, yet more preferably 0.3 dL/g or less, further more preferably 0.25 dL/g or less, and particularly more preferably 0.22 dL/g or less.

In addition, the intrinsic viscosity ($\eta_{AP}$) > the intrinsic viscosity ($\eta_A$) is preferable.

In the present invention, the total content of the bisphenol AP type polycarbonate resin and the bisphenol A type polycarbonate resin is more than 85% by mass, preferably 90% by mass or more, more preferably 92% by mass or more, still more preferably 95% by mass or more, yet more preferably 97% by mass or more, and further more preferably 99% by mass or more based on the total amount of resin components contained in the resin composition. There is no particular upper limit value, and the entire amount (100% by mass) may be composed of the bisphenol AP type polycarbonate resin and the bisphenol A type polycarbonate resin. By setting the ratio to the above range, it becomes possible to achieve both heat resistance and toughness.

<Antioxidant (C) >

It is preferable that the resin composition of the present invention should contain an antioxidant.

Examples of the antioxidant include a phenol antioxidant, an amine antioxidant, a phosphorus-based antioxidant, a thioether antioxidant, and the like. Among the above, the phosphorus-based antioxidant and the phenol antioxidant (more preferably, hindered phenol antioxidant) are preferable in the present invention. The phosphorus-based antioxidant is particularly preferable because of the excellent color phase of the formed article.

A preferable phosphite stabilizer as the phosphorus-based antioxidant is preferably a phosphite compound represented by the following formula (1) or (2).

[Formula 7]

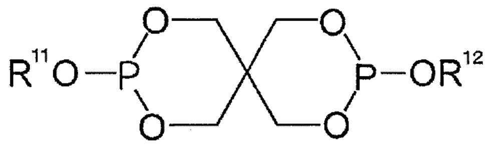

(1)

(In the formula (1), $R^{11}$ and $R^{12}$ each independently represent an alkyl group having 1 to 30 carbon atoms or an aryl group having 6 to 30 carbon atoms.)

[Formula 8]

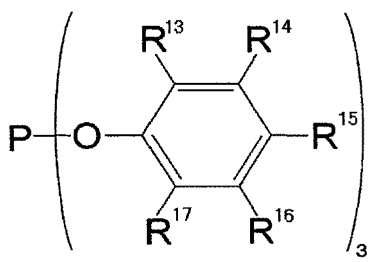

(2)

(In the formula (2), $R^{13}$ to $R^{17}$ each independently represent a hydrogen atom, an aryl group having 6 to 20 carbon atoms, or an alkyl group having 1 to 20 carbon atoms.)

In the above formula (1), it is preferable that the alkyl groups represented by $R^{11}$ and $R^{12}$ should be each independently a linear or branched alkyl group having 1 to 10 carbon atoms. When $R^{11}$ and $R^{12}$ are each an aryl group, it is preferable that they should be each an aryl group represented by any of the following formulas (1-a) , (1-b) and (1-c) . * in the formulas represents a bonding position with another site.

[Formula 9]

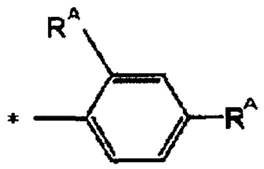

(1-a)

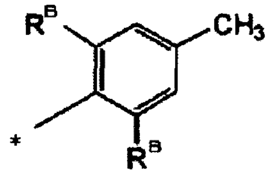

(1-b)

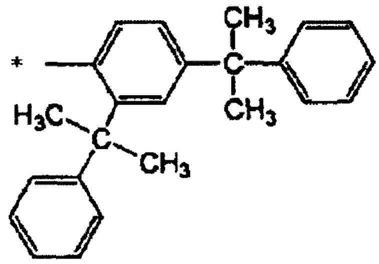

(1-c)

(In the formula (1-a) , $R^A$ each independently represent an alkyl group having 1 to 10 carbon atoms. In the formula (1-b), $R^B$ each independently represent an alkyl group having 1 to 10 carbon atoms.)

Hindered phenol antioxidants can be referred to the description in paragraph 0063 of Japanese Patent Laid-Open No. 2018-090677 and paragraph 0076 of Japanese Patent Laid-Open No. 2018-188496.

Antioxidants other than the above can be consulted in the description in paragraphs 0057 to 0061 of Japanese Patent Laid-Open No. 2017-031313.

The content of the antioxidant is preferably 0.01 parts by mass or more, more preferably 0.03 parts by mass or more, and still more preferably 0.05 parts by mass or more based on 100 parts by mass of the polycarbonate resins. In addition, the upper limit value of the content of the antioxidant is preferably 0.4 parts by mass or less, more preferably 0.3 parts by mass or less, still more preferably 0.2 parts by mass or less, and even more preferably 0.15 parts by mass or less based on 100 parts by mass of the polycarbonate resins.

By setting the content of the antioxidant to the lower limit value described above or more, it becomes possible to obtain a formed article with better color phase and heat discoloration resistance. Also, by setting the content of the antioxidant to the upper limit value described above or less, it becomes possible to obtain a formed article with good moist heat stability without worsening heat discoloration resistance.

Moreover, when the phosphorus-based antioxidant and the phenol antioxidant (preferably, hindered phenol antioxidant) are used in combination as the antioxidant, it is preferable that the resin composition should contain the phosphorus-based antioxidant in the range of 0.001 to 0.2 parts by mass and the phenol antioxidant in the range of 0.001 to 0.2 parts by mass based on 100 parts by mass of the polycarbonate resins.

Only one kind of or two or more kinds of antioxidants may be used. When two or more kinds are used, it is preferable that the total amount thereof should be within the above range.

<Mold release agent (D)>

It is preferable that the resin composition of the present invention should contain a mold release agent.

When the resin composition contains a mold release agent, the rolling properties upon rolling a film-like or sheet-like formed article can be improved. For a formed article with a three dimensional shape, the article can be released more easily from a metal mold when the article is formed using it.
The kind of mold release agent is not particularly specified, and examples thereof include an aliphatic carboxylic acid, an ester of an aliphatic carboxylic acid and an alcohol, an aliphatic hydrocarbon compound with a number average molecular weight of 200 to 15,000, a polyether with a number average molecular weight of 100 to 5,000, a polysiloxane-based silicone oil.
Details of mold release agents can be consulted in the description in paragraphs 0035 to 0039 of International Publication No. WO 2015/190162.
The content of the mold release agent is preferably 0.001 parts by mass or more, more preferably 0.005 parts by mass or more, and still more preferably 0.007 parts by mass or more based on 100 parts by mass of the polycarbonate resins. The upper limit value is preferably 0.5 parts by mass or less, more preferably 0.3 parts by mass or less, and still more preferably 0.1 parts by mass or less.
Only one kind of or two or more kinds of mold release agents may be used. When two or more kinds are used, it is preferable that the total amount thereof should be within the above range.

<Other components>

The resin composition of the present invention may contain, in addition to the components described above, a polycarbonate resin other than the bisphenol A type polycarbonate resin and the bisphenol AP type polycarbonate resin, a thermoplastic resin other than the polycarbonate resins, an ultraviolet absorbent, a heat stabilizer, a flame retardant, a flame retardant auxiliary, a colorant, an antistatic agent, a fluorescent brightener, an antifogging agent, a flow improver, a plasticizer, a dispersing agent, an antimicrobial agent, an antiblocking agent, an impact improver, a sliding improver, a color phase improver, an acid trapping agent, and the like. These components each may be used as one kind thereof, or may be used in combination of two or more kinds.
It is preferable that the content of the above components, if contained, should be 0.1 to 5% by mass in total.
As the polycarbonate resin other than the bisphenol A type polycarbonate resin and the bisphenol AP type polycarbonate resin, a bisphenol C polycarbonate resin is exemplified. Alternatively, the resin composition of the present invention can be composed in a manner substantially free of the bisphenol C polycarbonate resin. The term "substantially free of" means that the content of the bisphenol C polycarbonate resin is less than 1% by mass among the resin components contained in the resin composition.

<Physical properties>

It is preferable that the resin composition of the present invention should have a melt viscosity adjusted to an appropriate range to provide good formability.
Specifically, the resin composition of the present invention has a melt viscosity at 300°C, measured with a shear rate of 122 $sec^{-1}$, of preferably 3,500 Pa·s or less, more preferably 3,000 Pa·s or less, and still more preferably 2,500 Pa·s or less, and it may be 2,000 Pa·s or less. The lower limit value is preferably 1,000 Pa·s or more from the viewpoint of formability.
Note that, for the above melt viscosity, the value measured in accordance with the method described in Examples, which will be mentioned later, is employed.
The resin composition of the present invention is preferably transparent when made into a formed article, and more preferably it has high light transmission.
The resin composition of the present invention has a total light transmittance of preferably 80% or more, and more preferably 85% or more, when formed into a formed article having a thickness of 4 mm. There is no particular limitation on the upper limit value, and for example, 99% or less, or even 95% or less, is sufficient to meet the performance requirements.
Note that, for the total light transmittance in the present specification, the value measured in accordance with the method described in Examples, which will be mentioned later, is employed.
In addition, the resin composition of the present invention has a haze of preferably 5.0% or less, more preferably 2.0% or less, and still more preferably 1.8% or less, when formed into a formed article having a thickness of 4 mm. There is no particular limitation on the lower limit value, and for example, 0.1% or more, or even 0.5% or more, is sufficient to meet the performance requirements.
Note that, for the haze in the present specification, the value measured in accordance with the method described in Examples, which will be mentioned later, is employed.
The resin composition of the present invention has a deflection temperature under load at a load of 1.8 MPa, measured in accordance with ISO 75-1, of preferably 135°C or higher, more preferably 137°C or higher, and still more

preferably 140°C or higher. A higher upper limit is more preferable, but for example, 200°C or lower, or even 160°C or lower, is sufficient to meet the performance requirements.

Note that, for the deflection temperature under load in the present specification, the value measured in accordance with the method described in Examples, which will be mentioned later, is employed.

<Method for producing resin composition>

There is no limitation on the method for producing the resin composition of the present invention, and a wide range of known methods for producing resin compositions can be employed. An example thereof is a method in which the polycarbonate resins described above and other components to be compounded therewith if required are premixed using, for example, one of various mixing machines such as a tumbler or a Henschel mixer, and then melt-kneaded using a mixing machine such as a Banbury mixer, a roll, a Brabender, a single screw kneading extruder, a twin screw kneading extruder, or a kneader.

Note that the temperature for melt kneading is not particularly limited, and it is normally in the range of 240 to 360°C.

From the above melt-kneaded resin composition, pellets are obtained by, for example, strand cutting. By subjecting the pellets thus obtained to extrusion forming with a film extruder, for example, a film-like or sheet-like formed article can be produced. Alternatively, by subjecting the pellets to injection forming with an injection forming machine, a formed article with an arbitrary shape can be produced.

<Formed article>

A formed article of the present invention is formed from the resin composition of the present invention. The formed article of the present invention is suitably used for components of electrical and electronic equipment, office automation equipment, mobile information terminals, machine components, home appliances, vehicle components, various containers, lighting equipment, and the like. Among the above, the formed article of the present invention is particularly suitable for use in the housing of electrical and electronic equipment, office automation equipment, information terminal equipment, and home appliances, lighting equipment and vehicle components (particularly, vehicle interior components), surface films for smart phones and touch panels, optical materials, and optical discs. In particular, the formed article of the present invention is suited for touch panel sensors.

As one embodiment of the formed article of the present invention, a film is exemplified, and it is particularly suitable for use as a transparent film for high heat resistance applications. More specifically, it can be used as a film for transparent electrode base materials. Here, the transparent electrode is one in which a transparent electrode layer is arranged on one side or both sides of a transparent base material. A further layer may be present between the transparent base material and the transparent electrode layer. The transparent film of the present invention can be used as the transparent base material in this transparent electrode. It can also be suitably used as a protective film for protecting products in high heat resistance applications.

The thickness of a film formed from the resin composition of the present invention is not particularly limited, and it is preferably 30 μm or more and more preferably 40 μm or more, and it may be 50 μm or more, and even 80 μm or more. The upper limit value is preferably 5 mm or less, more preferably 3 mm or less, and still more preferably 1 mm or less.

[Examples]

Hereinafter, the present invention will be described in further detail with reference to Examples, but the present invention is not to be construed as limited by them.

<Raw materials>

• Bisphenol AP type polycarbonate resin (A):

(Al) aromatic polycarbonate resin obtained by the interfacial polymerization method using bisphenol AP as the starting raw material (manufactured by Mitsubishi Gas Chemical Company, Inc., FPC-0220, viscosity average molecular weight: 20,200, intrinsic viscosity: 0.44 dL/g, Tg: 184°C, and melt viscosity: 6,400 Pa-s); and

(A2) aromatic polycarbonate resin obtained by the interfacial polymerization method using bisphenol AP as the starting raw material (manufactured by Mitsubishi Gas Chemical Company, Inc., FPC-0210, viscosity average molecular weight: 11,500, intrinsic viscosity: 0.27 dL/g, Tg: 170°C, and melt viscosity: 1,300 Pa·s).

• Bisphenol A type polycarbonate resin (B):

(B1) aromatic polycarbonate resin obtained by the interfacial polymerization method using bisphenol A as the starting raw material (manufactured by Mitsubishi Engineering-Plastics Corporation, H-7000F, viscosity average molecular weight: 14,000, intrinsic viscosity: 0.30 dL/g);
(B2) aromatic polycarbonate resin obtained by the interfacial polymerization method using bisphenol A as the starting raw material (manufactured by Mitsubishi Engineering-Plastics Corporation, L-1000F, viscosity average molecular weight: 10,800, intrinsic viscosity: 0.24 dL/g); and
(B3) aromatic polycarbonate resin obtained by the interfacial polymerization method using bisphenol A as the starting raw material (manufactured by Mitsubishi Engineering-Plastics Corporation, S-3000F, viscosity average molecular weight: 21,000, intrinsic viscosity: 0.43 dL/g).

• Antioxidant (C):

(C1) bis(2,6-di-tert-butyl-4-methylphenyl)pentaerythritol diphosphite (phosphorus-based antioxidant, manufactured by ADEKA CORPORATION, Adekastab PEP-36);
(C2) tris(2,4-di-tert-butylphenyl) phosphite (phosphorus-based antioxidant, manufactured by ADEKA CORPORATION, Adekastab 2112); and
(C3) pentaerythritol tetrakis[3-3,5-di-tert-butyl-4-hydroxyphenyl]propionate (phenol antioxidant, manufactured by BASF SE, Irganox 1010).

• Mold release agent (D):

(DI) glycerin monostearate (manufactured by RIKEN VITAMIN CO., LTD., RIKEMAL S-100A).

Examples 1 to 3 and Comparative Examples 1 to 4

Each of the components described above was weighed to achieve the amounts to be added described in Table 1. Then, after mixing them in a tumbler for 15 minutes, the materials were melt-kneaded in a vented twin screw extruder at a cylinder temperature of 320°C, and pellets were obtained by strand cutting.
As the twin screw extruder, "TEX30α" manufactured by The Japan Steel Works, LTD. with a screw diameter of 32 mm was used.

<Methods for measuring intrinsic viscosity and viscosity average molecular weight>

The intrinsic viscosity [η] (unit: dL/g) of each resin was measured using methylene chloride as the solvent. The temperature condition was set at 25°C. The specific viscosity [$\eta_{sp}$] at each solution concentration [C] (g/dL) was measured with an Ubbelohde viscometer. The intrinsic viscosity was calculated from the obtained value of specific viscosity and concentration according to the following formula.

[Expression 1]

$$\eta = \lim_{c \to 0} \eta_{sp} / \mathrm{C}$$

The viscosity average molecular weight [Mv] was calculated according to the Schnell's viscosity equation, that is, $\eta = 1.23 \times 10^{-4} Mv^{0.83}$.

<Method for measuring glass transition temperature (Tg)>

Using a differential scanning calorimeter (EXSTAR DSC7020, SII NanoTechnology Inc.), about 5 to 10 mg of the sample was heated from 40°C to 280°C at a temperature increase rate of 20°C/min. The temperature was held for 5 minutes and then cooled down to 40°C at a rate of 40°C/min. The temperature was held at 40°C for 10 minutes and then increased again to 280°C at a rate of 10°C/min. From the DSC data obtained in the second temperature increase, the midpoint glass transition temperature was set as the glass transition temperature (Tg).

<Measurement of melt viscosity>

The obtained pellets were dried at 120°C for 5 hours. Then, using a capillary rheometer, the resin was extruded through a nozzle hole (orifice) of 10 mm in length and 1.0 mm in diameter at 300°C. At that time, the shear viscosity (unit: Pa·s) at a shear rate of 122 $sec^{-1}$ was measured and used as the melt viscosity.

As the capillary rheometer, "Capilograph 1B" (trade name) manufactured by Toyo Seiki Seisaku-sho, Ltd. was used.

<Measurement of total light transmittance and haze>

The obtained pellets were dried at 120°C for 5 hours with a hot air circulation drying machine. Then, using an injection forming machine, a flat plate specimen (60 mm × 60 mm × 4 mm) was formed under conditions with a cylinder temperature of 300°C, a metal mold temperature of 80°C, and a forming cycle of 45 seconds.

As the injection forming machine, "J110AD" (trade name) manufactured by The Japan Steel Works, LTD. was used.

Using a haze meter, the total light transmittance (%) and the haze (%) of the plate specimen obtained by the injection forming were measured under conditions with a light source of D65 and a field of view of 10° in accordance with JIS-K-7361 and JIS-K-7136, respectively.

As the haze meter, "HM-150" (trade name) manufactured by MURAKAMI COLOR RESEARCH LABORATORY CO., LTD. was used.

<Measurement of deflection temperature under load (HDT)>

The obtained pellets were dried at 120°C for 5 hours with a hot air circulation drying machine.

Then, using an injection forming machine, an ISO multipurpose test specimen (type A1, thickness of 4 mm) in accordance with JIS-K 7139 was formed under conditions with a cylinder temperature of 300°C, a metal mold temperature of 80°C, and a forming cycle of 45 seconds.

As the injection forming machine, "J110AD" (trade name) manufactured by The Japan Steel Works, LTD. was used.

Using the above ISO multipurpose test specimen, the deflection temperature under load (unit: °C) was measured under conditions with a load of 1.80 MPa (method A) using an HDT testing apparatus in accordance with ISO 75-1.

As the HDT (deflection temperature under load) testing apparatus, "3M-2" (trade name) manufactured by Toyo Seiki Seisaku-sho, Ltd. was used.

[Table 1]

| Component | Abbreviation | Examples 1 | 2 | 3 |
|---|---|---|---|---|
| Bisphenol AP type polycarbonate resin (A) | A1 | 60 | 70 | 75 |
| | A2 | | | |
| Bisphenol A type polycarbonate resin (B) | B1 | 40 | 30 | |
| | B2 | | | 25 |
| | B3 | | | |
| Antioxidant (C) | C1 | 0.01 | 0.01 | 0.01 |
| | C2 | 0.03 | 0.03 | 0.03 |
| | C3 | 0.05 | 0.05 | 0.05 |
| Mold release agent (D) | D1 | 0.01 | 0.01 | 0.01 |
| Difference in viscosity average molecular weight | | 6200 | 6200 | 9400 |
| Difference in intrinsic viscosity (dL/g) | | 0.00 | 0.00 | 0.00 |
| Melt viscosity (Pa·s) | | 1020 | 1550 | 1790 |
| Total light transmittance (%) | | 89.1 | 88.9 | 89 |
| Haze (%) | | 1.6 | 1.4 | 1.4 |
| HDT (°C) | | 143.2 | 147.1 | 149.9 |

| Component | Abbreviation | Comparative Examples 1 | 2 | 3 | 4 |
|---|---|---|---|---|---|
| Bisphenol AP type polycarbonate resin (A) | A1 | 70 | | 100 | |
| | A2 | | | | 50 |
| Bisphenol A type polycarbonate resin (B) | B1 | | 100 | | 50 |
| | B2 | | | | |
| | B3 | 30 | | | |
| Antioxidant (C) | C1 | 0.01 | 0.01 | 0.01 | 0.01 |
| | C2 | 0.03 | 0.03 | 0.03 | 0.03 |
| | C3 | 0.05 | 0.05 | 0.05 | 0.05 |
| Mold release agent (D) | D1 | 0.01 | 0.01 | 0.01 | 0.01 |
| Difference in viscosity average molecular weight | | 800 | - | - | 2500 |
| Difference in intrinsic viscosity (dL/g) | | 0.00 | - | - | 0.00 |
| Melt viscosity (Pa·s) | | 2050 | 1000 | 6250 | 660 |
| Total light transmittance (%) | | 78 | 89.3 | Unformable | 88.1 |
| Haze (%) | | 21.4 | 1.3 | Unformable | 1.9 |
| HDT (°C) | | 149.1 | 120.7 | Unformable | 127.9 |

(Notes on the table)

Contents: parts by mass

Difference in viscosity average molecular weight: a difference between the viscosity average molecular weight of the bisphenol AP polycarbonate and the viscosity average molecular weight of the bisphenol A polycarbonate

Difference in intrinsic viscosity: the absolute value of the difference (|hAP - hA|) between the intrinsic viscosity (hAP) of the bisphenol AP polycarbonate and the intrinsic viscosity (hA) of the bisphenol A polycarbonate

Unformable: indicating that the melt viscosity was too high to form an injection test specimen
HDT: deflection temperature under load

As can be seen from Table 1, by using the bisphenol AP type polycarbonate resin and the bisphenol A type polycarbonate resin with particular viscosity average molecular weights, with a particular content ratio, and with a particular difference between the viscosity average molecular weights, the obtained formed articles had excellent transparency, high total light transmittance, and small haze. Furthermore, the formed articles had high formability, a high deflection temperature, and excellent heat resistance (Examples 1 to 3) .

In contrast, when the bisphenol A type polycarbonate resin had a large viscosity average molecular weight and the difference in viscosity average molecular weight with the bisphenol AP type polycarbonate resin was small, the total light transmittance was low and the haze was high (Comparative Example 1).

In addition, when no bisphenol AP type polycarbonate resin was contained, the deflection temperature under load was low and the heat resistance was inferior (Comparative Example 2).

On the other hand, when no bisphenol A type polycarbonate resin was contained, the resin composition had a high melt viscosity and could not be formed (Comparative Example 3).

Furthermore, when the bisphenol AP type polycarbonate resin had a small viscosity average molecular weight and the difference in viscosity average molecular weight with the bisphenol A type polycarbonate resin was small, the heat resistance of the resulting resin composition was inferior (Comparative Example 4).

## Claims

**1.** A resin composition comprising:

a bisphenol AP type polycarbonate resin (A) having a viscosity average molecular weight of 18,500 to 23,000 and having a content of the constituent unit represented by the following formula (A-1) of 70% by mol or more in the entire constituent units excluding the end groups:

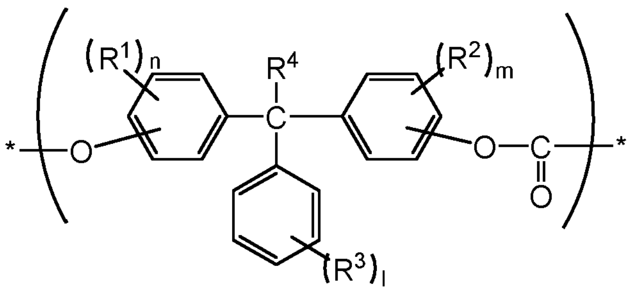

(A-1)

wherein $R^1$ to $R^4$ each independently represent a fluorine atom, a chlorine atom, a bromine atom, an iodine atom, an alkyl group having 1 to 9 carbon atoms, an aryl group having 6 to 12 carbon atoms, an alkoxy group having 1 to 5 carbon atoms, an alkenyl group having 2 to 5 carbon atoms, or an aralkyl group having 7 to 17 carbon atoms, 1 represents an integer of 0 to 5, m and n each independently represent an integer of 0 to 4, and * represents an end group or a bonding position with another constituent unit; and

a bisphenol A type polycarbonate resin (B) having a viscosity average molecular weight of 10,000 to 15,000 and having a content of the constituent unit represented by the following formula (B-1) of 70% by mol or more in the entire constituent units excluding the end groups:

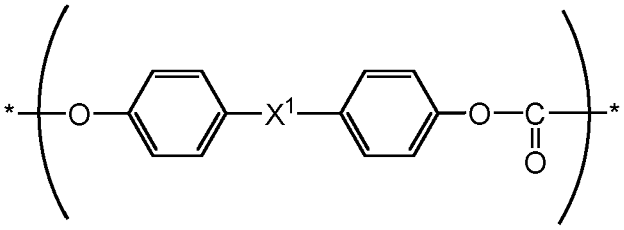

(B-1)

wherein * represents an end group or a bonding position with another constituent unit and $X^1$ represents the following structure:

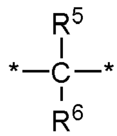

and $R^5$ and $R^6$ are each a hydrogen atom or a methyl group,
wherein

a mass ratio of the bisphenol AP type polycarbonate resin (A) to the bisphenol A type polycarbonate resin (B) is 20/80 to 90/10,
a difference between the viscosity average molecular weight of the bisphenol AP type polycarbonate resin (A) and the viscosity average molecular weight of the bisphenol A type polycarbonate resin (B) is 5,000 to 13,000, and
a total content of the bisphenol AP type polycarbonate resin (A) and the bisphenol A type polycarbonate resin (B) is 92% by mass or more of a total amount of resin components contained in the resin composition,
wherein the viscosity average molecular weight is calculated according to Schnell's viscosity equation using the intrinsic viscosity determined for a solution of the resin concerned in methylene chloride at 25°C, as described in the section <Methods for measuring intrinsic viscosity and viscosity average molecular weight> of the description.

**2.** The resin composition according to claim 1, wherein a difference ($|\eta_{AP} - \eta_A|$) between an intrinsic viscosity ($\eta_{AP}$) of the bisphenol AP type polycarbonate resin (A) and an intrinsic viscosity ($\eta_A$) of the bisphenol A type polycarbonate resin (B) is 0.04 to 0.4 dL/g, wherein the intrinsic viscosity is determined for a solution of the resin concerned in methylene chloride at 25°C, as described in the section <Methods for measuring intrinsic viscosity and viscosity average molecular weight> of the description.

**3.** The resin composition according to claim 1 or 2, wherein the resin composition has a melt viscosity at 300°C of 1,000 to 3,500 Pa·s, as measured with a shear rate of 122 $sec^{-1}$, wherein the melt viscosity is determined using a capillary rheometer, as described in the section <Measurement of melt viscosity> of the description.

**4.** The resin composition according to any one of claims 1 to 3, wherein the resin composition has a deflection temperature under load of 135°C or higher at a load of 1.8 MPa, as measured in accordance with ISO 75-1 using an injection forming machine, as described in the section <Measurement of deflection temperature under load (HDT)> of the description.

**5.** The resin composition according to any one of claims 1 to 4, wherein the bisphenol AP type polycarbonate resin (A) has a glass transition temperature of 172°C or higher, wherein the glass transition temperature is determined using a differential scanning calorimeter, as described in the section <Method for measuring glass transition temperature (Tg)> of the description.

**6.** The resin composition according to any one of claims 1 to 5, wherein, when the resin composition is formed into a formed article having a thickness of 4 mm, the formed article has a total light transmittance of 80% or more, wherein the total light transmittance is determined using a haze meter, as described in the section <Measurement of total light transmittance and haze> of the description.

7. The resin composition according to any one of claims 1 to 6, wherein, when the resin composition is formed into a formed article having a thickness of 4 mm, the formed article has a haze of 5.0% or less, wherein the haze is determined using a haze meter, as described in the section <Measurement of total light transmittance and haze> of the description.

8. The resin composition according to any one of claims 1 to 7, further comprising at least one of an antioxidant and a mold release agent.

9. A formed article formed from the resin composition according to any one of claims 1 to 8.

10. The formed article according to claim 9, wherein the formed article is a film.

11. The formed article according to claim 9 or 10, wherein the formed article is for a touch panel sensor.

**Patentansprüche**

1. Harzzusammensetzung, umfassend:

ein Polycarbonatharz vom Bisphenol AP-Typ (A) mit einem viskositätsgemittelten Molekulargewicht von 18.500 bis 23.000 und mit einem Gehalt einer durch die folgende Formel (A-1) dargestellten konstitutiven Einheit von 70 mol-% oder mehr in den gesamten konstitutiven Einheiten ausschließlich der Endgruppen:

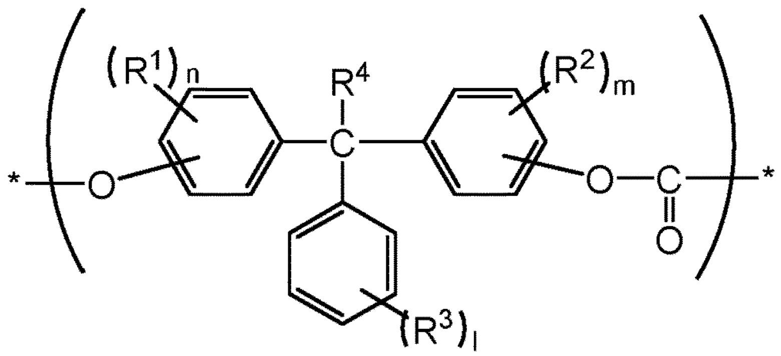

(A-1)

worin $R^1$ bis $R^4$ unabhängig ein Fluoratom, ein Chloratom, ein Bromatom, ein Iodatom, eine Alkylgruppe mit 1 bis 9 Kohlenstoffatomen, eine Arylgruppe mit 6 bis 12 Kohlenstoffatomen, eine Alkoxygruppe mit 1 bis 5 Kohlenstoffatomen, eine Alkenylgruppe mit 2 bis 5 Kohlenstoffatomen oder eine Aralkylgruppe mit 7 bis 17 Kohlenstoffatomen darstellen, 1 eine ganze Zahl von 0 bis 5 darstellt, m und n jeweils unabhängig eine ganze Zahl von 0 bis 4 darstellen und * eine Endgruppe oder eine Bindungsposition mit einer anderen konstitutiven Einheit darstellt, und
ein Polycarbonatharz vom Bisphenol A-Typ (B) mit einem viskositätsgemittelten Molekulargewicht von 10.000 bis 15.000 und mit einem Gehalt der durch die folgende Formel (B-1) dargestellten konstitutiven Einheit von 70 mol-% oder mehr in den gesamten konstitutiven Einheiten ausschließlich der Endgruppen:

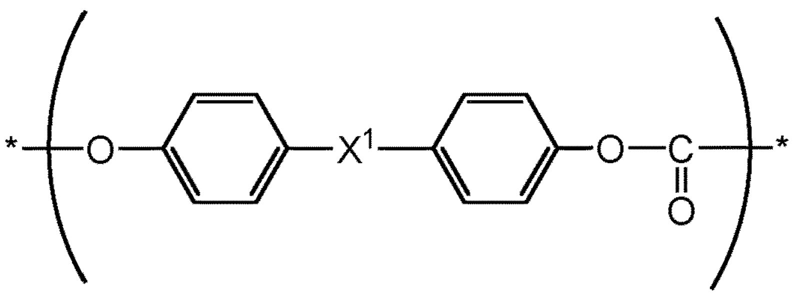

(B-1)

worin * eine Endgruppe oder eine Bindungsposition mit einer anderen konstitutiven Einheit darstellt und $X^1$ die

folgende Struktur darstellt:

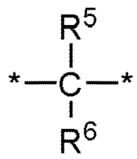

und $R^5$ und $R^6$ jeweils ein Wasserstoffatom oder eine Methylgruppe sind,
wobei
ein Massenverhältnis des Polycarbonatharzes vom Bisphenol AP-Typ (A) zu dem Polycarbonatharz vom Bisphenol A-Typ (B) 20/80 bis 90/10 beträgt,
eine Differenz zwischen dem viskositätsgemittelten Molekulargewicht des Polycarbonatharzes vom Bisphenol AP-Typ (A) und dem viskositätsgemittelten Molekulargewicht des Polycarbonatharzes vom Bisphenol A-Typ (B) 5.000 bis 13.000 beträgt und
ein Gesamtgehalt des Polycarbonatharzes vom Bisphenol AP-Typ (A) und des Polycarbonatharzes vom Bisphenol A-Typ (B) 92 Masse-% oder mehr einer Gesamtmenge der in der Harzzusammensetzung enthaltenen Harzkomponenten beträgt,
wobei das viskositätsgemittelte Molekulargewicht gemäß der Schnell'schen Viskositätsgleichung unter Verwendung der Grenzviskosität, die für eine Lösung des betreffenden Harzes in Methylenchlorid bei 25°C bestimmt wird, wie im Abschnitt <Verfahren zur Messung der Grenzviskosität und des viskositätsgemittelten Molekulargewichts> der Beschreibung beschrieben berechnet wird.

**2.** Harzzusammensetzung gemäß Anspruch 1, wobei eine Differenz ($|\eta_{AP} - \eta_A|$) zwischen einer Grenzviskosität ($\eta_{AP}$) des Polycarbonatharzes vom Bisphenol AP-Typ (A) und einer Grenzviskosität ($\eta_A$) des Polycarbonatharzes vom Bisphenol A-Typ (B) 0,04 bis 0,4 dL/g beträgt, wobei die Grenzviskosität für eine Lösung des betreffenden Harzes in Methylenchlorid bei 25°C wie im Abschnitt <Verfahren zur Messung der Grenzviskosität und des viskositätsgemittelten Molekulargewichts> der Beschreibung beschrieben bestimmt wird.

**3.** Harzzusammensetzung gemäß Anspruch 1 oder 2, wobei die Harzzusammensetzung eine Schmelzviskosität bei 300°C von 1.000 bis 3.500 Pa·s, gemessen mit einer Schergeschwindigkeit von 122 $sek^{-1}$, aufweist, wobei die Schmelzviskosität unter Verwendung eines Kapillarrheometers wie im Abschnitt <Messung der Schmelzviskosität> der Beschreibung beschrieben bestimmt wird.

**4.** Harzzusammensetzung gemäß einem der Ansprüche 1 bis 3, wobei die Harzzusammensetzung eine Formbeständigkeitstemperatur unter einer Last von 135°C oder höher und einer Last von 1,8 MPa, gemessen gemäß ISO 75-1 unter Verwendung einer Injektionsformmaschine, wie im Abschnitt <Messung der Formbeständigkeitstemperatur unter Last (HDT)> der Beschreibung beschrieben, aufweist.

**5.** Harzzusammensetzung gemäß einem der Ansprüche 1 bis 4, wobei das Polycarbonatharz vom Bisphenol AP-Typ (A) eine Glasübergangstemperatur von 172°C oder höher aufweist, wobei die Glasübergangstemperatur unter Verwendung eines Differential-Scanning-Kalorimeters wie im Abschnitt <Verfahren zur Messung der Glasübergangstemperatur (Tg)> der Beschreibung beschrieben bestimmt wird.

**6.** Harzzusammensetzung gemäß einem der Ansprüche 1 bis 5, wobei, wenn die Harzzusammensetzung zu einem Formgegenstand mit einer Dicke von 4 mm gebildet wird, der Formgegenstand eine Gesamtlichtdurchlässigkeit von 80 % oder mehr aufweist, wobei die Gesamtlichtdurchlässigkeit unter Verwendung eines Trübungsmessgeräts wie im Abschnitt <Messung der Gesamtlichtdurchlässigkeit und Trübung> der Beschreibung beschrieben bestimmt wird.

**7.** Harzzusammensetzung gemäß einem der Ansprüche 1 bis 6, wobei, wenn die Harzzusammensetzung zu einem Formgegenstand mit einer Dicke von 4 mm geformt wird, der Formgegenstand eine Trübung von 5,0 % oder weniger aufweist, wobei die Trübung unter Verwendung eines Trübungsmessgeräts wie im Abschnitt <Messung der Gesamtlichtdurchlässigkeit und Trübung> der Beschreibung beschrieben bestimmt wird.

**8.** Harzzusammensetzung gemäß einem der Ansprüche 1 bis 7, ferner umfassend mindestens eines von einem Antioxidans und einem Formtrennmittel.

**9.** Formgegenstand, der aus der Harzzusammensetzung gemäß einem der Ansprüche 1 bis 8 geformt ist.

**10.** Formgegenstand gemäß Anspruch 9, wobei der Formgegenstand ein Film ist.

**11.** Formgegenstand gemäß Anspruch 9 oder 10, wobei der Formgegenstand für einen Touchpanel-Sensor bestimmt ist.

## Revendications

**1.** Composition de résine comprenant :

une résine de polycarbonate de type bisphénol AP (A) présentant un poids moléculaire moyen en viscosité de 18 500 à 23 000 et présentant une teneur en motif constitutif représenté par la formule (A-1) suivante de 70 % en mole ou plus dans l'ensemble des motifs constitutifs à l'exclusion des groupes terminaux :

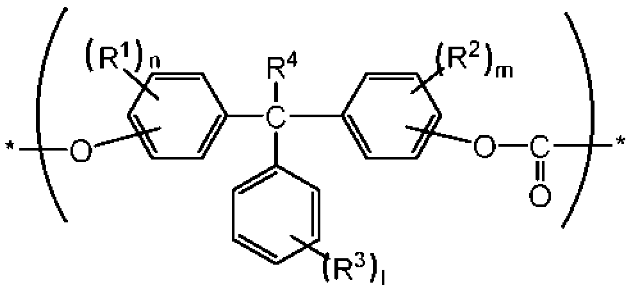

(A-1)

dans laquelle $R^1$ à $R^4$ représentent chacun indépendamment un atome de fluor, un atome de chlore, un atome de brome, un atome d'iode, un groupe alkyle présentant 1 à 9 atomes de carbone, un groupe aryle présentant 6 à 12 atomes de carbone, un groupe alcoxy présentant 1 à 5 atomes de carbone, un groupe alcényle présentant 2 à 5 atomes de carbone, ou un groupe aralkyle présentant 7 à 17 atomes de carbone, l représente un nombre entier allant de 0 à 5, m et n représentent chacun indépendamment un nombre entier allant de 0 à 4, et * représente un groupe terminal ou une position de liaison avec un autre motif constitutif ; et

une résine de polycarbonate de type bisphénol A (B) présentant un poids moléculaire moyen en viscosité de 10 000 à 15 000 et présentant une teneur en motif constitutif représenté par la formule (B-1) suivante de 70 % en mole ou plus dans l'ensemble des motifs constitutifs à l'exclusion des groupes terminaux :

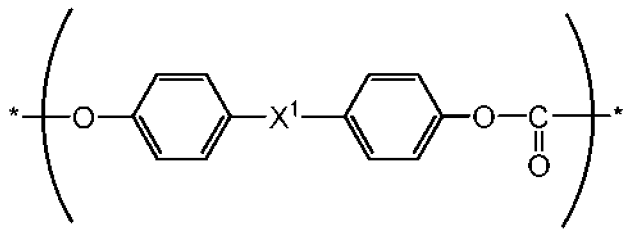

(B-1)

dans laquelle * représente un groupe terminal ou une position de liaison avec un autre motif constitutif et $X^1$ représente la structure suivante :

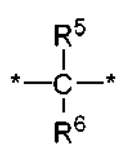

et $R^5$ et $R^6$ sont chacun un atome d'hydrogène ou un groupe méthyle, dans laquelle

un rapport en masse de la résine polycarbonate de type bisphénol AP (A) par rapport à la résine de polycarbonate de type bisphénol A (B) est de 20/80 à 90/10,

une différence entre le poids moléculaire moyen en viscosité de la résine de polycarbonate de type bisphénol AP (A) et le poids moléculaire moyen en viscosité de la résine de polycarbonate de type bisphénol A (B) est de 5 000 à 13 000, et

une teneur totale de la résine de polycarbonate de type bisphénol AP (A) et de la résine de polycarbonate de type bisphénol A (B) est de 92 % en masse ou plus d'une quantité totale de composants de résine contenus dans la composition de résine,
dans laquelle le poids moléculaire moyen en viscosité est calculé selon l'équation de viscosité de Schnell en utilisant la viscosité intrinsèque déterminée pour une solution de la résine concernée dans le chlorure de méthylène à 25 °C, comme décrit dans la section <Procédés de mesure de la viscosité intrinsèque et du poids moléculaire moyen en viscosité> de la description.

**2.** Composition de résine selon la revendication 1, dans laquelle une différence ($|\eta_{AP} - \eta_A|$) entre une viscosité intrinsèque ($\eta_{AP}$) de la résine de polycarbonate de type bisphénol AP (A) et une viscosité intrinsèque ($\eta_A$) de la résine de polycarbonate de type bisphénol A (B) est de 0,04 à 0,4 dl/g, dans laquelle la viscosité intrinsèque est déterminée pour une solution de la résine concernée dans le chlorure de méthylène à 25 °C, comme décrit dans la section <Procédés de mesure de la viscosité intrinsèque et du poids moléculaire moyen en viscosité> de la description.

**3.** Composition de résine selon la revendication 1 ou 2, dans laquelle la composition de résine présente une viscosité à l'état fondu à 300 °C de 1000 à 3 500 Pa.s, telle que mesurée avec un taux de cisaillement de 122 $sec^{-1}$, dans laquelle la viscosité à l'état fondu est déterminée en utilisant un rhéomètre à capillaire, comme décrit dans la section <Mesure de la viscosité à l'état fondu> de la description.

**4.** Composition de résine selon l'une quelconque des revendications 1 à 3, dans laquelle la composition de résine présente une température de fléchissement sous charge de 135 °C ou plus à une charge de 1,8 MPa, telle que mesurée conformément à l'ISO 75-1 en utilisant une machine de formage par injection, comme décrit dans la section <Mesure de la température de fléchissement sous charge (HDT)> de la description.

**5.** Composition de résine selon l'une quelconque des revendications 1 à 4, dans laquelle la résine de polycarbonate de type bisphénol AP (A) présente une température de transition vitreuse de 172 °C ou plus, dans laquelle la température de transition vitreuse est déterminée en utilisant un calorimètre à balayage différentiel, comme décrit dans la section <Procédé de mesure de la température de transition vitreuse (Tg)> de la description.

**6.** Composition de résine selon l'une quelconque des revendications 1 à 5, dans laquelle, quand la composition de résine est formée sous la forme d'un article façonné présentant une épaisseur de 4 mm, l'article façonné présente une transmittance totale de la lumière de 80 % ou plus, dans laquelle la transmittance totale de la lumière est déterminée en utilisant un dispositif de mesure de trouble, comme décrit dans la section <Mesure de la transmittance totale de la lumière et du trouble> de la description.

**7.** Composition de résine selon l'une quelconque des revendications 1 à 6, dans laquelle, quand la composition de résine est formée sous la forme d'un article façonné présentant une épaisseur de 4 mm, l'article façonné présente un trouble de 5,0 % ou moins, dans laquelle le trouble est déterminé en utilisant un dispositif de mesure de trouble, comme décrit dans la section <Mesure de la transmittance totale de la lumière et du trouble> de la description.

**8.** Composition de résine selon l'une quelconque des revendications 1 à 7, comprenant en outre au moins un d'un antioxydant et d'un agent de démoulage.

**9.** Article façonné formé à partir de la composition de résine selon l'une quelconque des revendications 1 à 8.

**10.** Article façonné selon la revendication 9, dans lequel l'article façonné est un film.

**11.** Article façonné selon la revendication 9 ou 10, dans lequel l'article façonné est pour un capteur d'écran tactile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 64043558 A
- JP 2018154819 B
- JP 2018154819 A
- JP 2018090677 A
- JP 2018188496 A
- JP 2017031313 A
- WO 2015190162 A